# EUROPÄISCHE PATENTSCHRIFT

(11) **EP 3 762 320 B1**
(45) Veröffentlichungstag und Bekanntmachung des Hinweises auf die Patenterteilung: **11.05.2022**
(21) Anmeldenummer: 19709422.0
(22) Anmeldetag: 01.03.2019
(51) Int. Cl.: B65G 53/66, B65G 53/58, B29C 48/255, B29C 48/25, B29C 48/27, B29C 48/285, B29B 7/60, B65G 53/14, B65G 53/42

(54) **ANSAUGVORRICHTUNG FÜR DIE ANSAUGUNG VON EXTRUSIONSMATERIAL ZU EINEM VORLAGEBEHÄLTER EINER EXTRUSIONSVORRICHTUNG UND VERFAHREN ZU IHRER LEERUNG**
SUCTION DEVICE FOR SUCTIONING EXTRUSION MATERIAL TO A STORAGE CONTAINER OF AN EXTRUSION DEVICE AND METHOD FOR ITS EMPTYING
DISPOSITIF D'ASPIRATION POUR L'ASPIRATION D'UN MATÉRIAU D'EXTRUSION VERS UN RÉCIPIENT COLLECTEUR D'UN DISPOSITIF D'EXTRUSION ET MÉTHODE POUR SON VIDAGE

(30) Priorität: 05.03.2018 DE 102018104958
(43) Veröffentlichungstag der Anmeldung: 13.01.2021
(73) Patentinhaber: Windmöller & Hölscher KG, 49525 Lengerich (DE)
(72) Erfinder: MINNERUP, Jens, 49525 Lengerich (DE); KULGEMEYER, Tobias, 49525 Lengerich (DE)
(86) Internationale Anmeldenummer: PCT/EP2019/055111
(87) Internationale Veröffentlichungsnummer: WO 2019/170534

(56) Entgegenhaltungen:
- EP-A1- 0 423 559
- EP-A1- 2 003 075
- EP-A1- 3 100 968
- EP-A2- 2 160 968
- DE-A1- 10 039 564
- GB-A- 2 089 310
- JP-A- 2000 289 853
- US-A- 6 036 408
- US-A1- 2016 244 275

## Beschreibung

Die vorliegende Erfindung betrifft eine Ansaugvorrichtung für die Ansaugung von Extrusionsmaterial zu einem Vorlagebehälter einer Extrusionsvorrichtung sowie ein Verfahren für das Leeren einer Ansaugleitung einer Extrusionsvorrichtung.

Es ist bekannt, dass Extrusionsvorrichtungen mit granulatförmigem Extrusionsmaterial versorgt werden sollen. Üblicherweise werden dabei Mischungen von unterschiedlichen Materialkomponenten in einem Vorlagebehälter der Extrusionsvorrichtung gesammelt. Vorlagebehälter von Extrusionsvorrichtungen stehen dabei mit entsprechenden Granulatbehältern oder Granulatsilos in Verbindung, um bestückt zu werden. Aus Granulatsäcken kann zum Beispiel mithilfe von Sauglanzen eine Förderung des gewünschten Granulats in den Vorlagebehälter erfolgen.

Nachteilhaft bei den bekannten Lösungen ist es, dass bei dem Wechsel von unterschiedlichen Materialmischungen im Vorlagebehälter entsprechendes Restmaterial in den Ansaugleitungen bzw. den Ansaugvorrichtungen verbleibt. So wird üblicherweise beim Wechsel der Materialmischung eine Sauglanze von einem Einsatzmaterial in einen Sack mit einer Füllung von Folgematerial eingesteckt. Für das nächste Nachfüllen befindet sich jedoch in der Ansaugvorrichtung und im zugehörigen Ansaugschlauch bzw. der zugehörigen Ansaugleitung noch das Einsatzmaterial, so dass für die ersten Nachförderungen trotz des Anschlusses an das Folgematerial durch das Vorhandensein des Einsatzmaterials in der Ansaugleitung dieses Einsatzmaterial als Rest in den Vorlagebehälter gelangt. Dies führt bei bekannten Lösungen dazu, dass die Übergangszeit, also die Zeit, in welcher nicht mehr das Einsatzprodukt mit der Einsatzmaterialmischung gefertigt wird, sondern auf das Folgematerial bzw. das Folgematerialprodukt mit der Folgematerialmischung umgestellt wird, deutlich verlängert wird. Ein separates Reinigen bzw. Entleeren der Ansaugvorrichtungen bzw. der Ansaugleitungen ist bisher nur sehr umständlich möglich und beinhaltet insbesondere ein Entfernen der Ansaugvorrichtung bzw. der Ansaugleitung von dem Vorlagebehälter. Aufgrund des hohen Zeitbedarfs für ein solches vollständiges Entfernen wird ein solcher Schritt üblicherweise nicht durchgeführt. Die Druckschrift EP 3 100 968 A1 offenbart eine Ansaugvorrichtung gemäß dem Oberbegriff des Anspruchs 1.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise eine Ansaugvorrichtung und/oder eine Ansaugleitung von Einsatzmaterial zu befreien und damit den Übergang von einem Einsatzmaterialprodukt zu einem Folgematerialprodukt zu beschleunigen.

Die voranstehende Aufgabe wird gelöst durch eine Ansaugvorrichtung mit den Merkmalen des Anspruchs 1, eine Ansaugleitung mit den Merkmalen des Anspruchs 9 sowie ein Verfahren mit den Merkmalen des Anspruchs 12. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Ansaugvorrichtung beschrieben sind, selbstverständlich auch im Zusammenhang mit der erfindungsgemäßen Ansaugleitung und dem erfindungsgemäßen Verfahren sowie jeweils umgekehrt, so dass bezüglich der Offenbarung zu den einzelnen Erfindungsaspekten stets wechselseitig Bezug genommen wird bzw. werden kann.

Eine erfindungsgemäße Ansaugvorrichtung dient der Ansaugung von Extrusionsmaterial zu einem Vorlagebehälter einer Extrusionsvorrichtung über eine Ansaugleitung. Hierfür ist die Ansaugvorrichtung mit einer Ansaugschnittstelle mit einer Ansaugöffnung ausgestattet zur Ansaugung von Extrusionsmaterial. Darüber hinaus weist die Ansaugvorrichtung eine Leitungsschnittstelle für den Anschluss an die Ansaugleitung auf. Die Ansaugöffnung ist mit der Leitungsschnittstelle zur Förderung von Extrusionsmaterial über eine interne Förderleitung verbunden. Weiter weist die Ansaugvorrichtung eine Ventilvorrichtung auf, welche in einer Öffnungsposition die Förderleitung zur Umgebung öffnet und in einer Schließposition die Förderleitung zur Umgebung abschließt.

Unter einer Extrusionsvorrichtung ist im Sinne der vorliegenden Erfindung insbesondere ein Bestandteil einer Blasfolien-Extrusionsvorrichtung und/oder einer Flachfolien-Extrusionsvorrichtung zu verstehen. Bevorzugt ist die Extrusionsvorrichtung als Blasfolien-Extrusionsvorrichtung und/oder als Flachfolien-Extrusionsvorrichtung ausgebildet. Das Extrusionsmaterial ist insbesondere als Kunststoffmaterial ausgebildet bzw. weist einen Kunststoffanteil auf. Kunststoff in diesem Sinne ist bevorzugt als schmelzbares und extrudierbares Material, z.B. in Form eines thermoplastischen Materials, ausgebildet. Besonders bevorzugt ist das Extrusionsmaterial vollständig oder im Wesentlichen vollständig aus Kunststoff gebildet. Das Extrusionsmaterial liegt dabei insbesondere in schüttfähiger und/oder rieselfähiger Form vor. Beispielsweise kann das Extrusionsmaterial Extrusionsgranulat und/oder Extrusionspartikel aufweisen.

Eine erfindungsgemäße Ansaugvorrichtung wird bei bekannten Lösungen von Extrusionsvorrichtungen und Vorlagebehältern eingesetzt. So kann in bekannter Weise mithilfe der Ansaugvorrichtung, welche zum Beispiel als Sauglanze ausgebildet sein kann, die Ansaugung von Extrusionsmaterial als Einsatzmaterial über die Ansaugöffnung der Ansaugschnittstelle gewährleistet werden. Über die Leitungsschnittstelle erfolgt die Weitergabe des angesaugten Extrusionsmaterials an eine Ansaugleitung und auf diese Weise in bekannter Umsetzung die Förderung in den Vorlagebehälter.

Die erfindungsgemäßen Vorteile werden besonders dann ersichtlich, wenn der Materialwechsel betrachtet wird. Soll von einem Einsatzmaterial auf ein Folgematerial umgestellt werden, so wird üblicherweise die Ansaugvorrichtung an ein neues Folgematerial in Form eines Silos oder eines Granulatsacks angeschlossen. Handelt es sich bei der Ansaugvorrichtung um eine Sauglanze, so wird diese von einem Sack mit Einsatzmaterial in einen Sack mit Folgematerial eingesteckt. Zu diesem Zeitpunkt, also nach dem Umstecken bzw. Umschalten der Ansaugvorrichtung, befindet sich jedoch innerhalb der Ansaugvorrichtung, insbesondere in der internen Förderleitung sowie nachfolgend in der Ansaugleitung, welche über die Leitungsschnittstelle mit der Ansaugvorrichtung verbunden ist, immer noch das Einsatzmaterial. Während bei bekannten Lösungen nun beim nächsten Nachförderungsschub in den Vorlagebehälter zuerst das darin verbliebene Einsatzmaterial in den Vorlagebehälter gelangt wäre, kann nun bei einer erfindungsgemäßen Ansaugvorrichtung ein Vorbereitungsschritt erfolgen.

Der voranstehend erwähnte Vorbereitungsschritt wird durch das Öffnen der Ventilvorrichtung, also durch ein Umstellen von der Schließposition in die Öffnungsposition, in welcher die Förderleitung zur Umgebung geöffnet ist, gewährleistet. In dieser Öffnungsposition kann nun bei einem Ansaugen noch beim Verbleib der Ansaugvorrichtung in dem Sack mit dem Einsatzmaterial ein Freisaugen der Ansaugleitung erfolgen. Wird ein Unterdruck aus dem Vorlagebehälter über die Ansaugleitung an die Ansaugvorrichtung angelegt, so wird bei geöffneter Ventilvorrichtung in Öffnungsposition nun kein Einsatzmaterial über die Ansaugvorrichtung mehr nachgesaugt, sondern vielmehr ersetzt Luft aus der Umgebung über die Ventilvorrichtung, das in den Vorlagebehälter eingesaugte Einsatzmaterial aus der Ansaugleitung. Wird nun anschließend die Ansaugvorrichtung mit einer neuen Materialquelle verbunden bzw. in einen Sack mit Folgematerial eingesteckt, so ist die Ansaugleitung frei von dem Einsatzmaterial. Bei dem ersten Nachförderungsschub in den Vorlagebehälter wird nun durch den vorher freigeräumten Teil der Ansaugleitung ein geringerer Anteil an Einsatzmaterial in die Folgevorrichtung eingebracht. Zu diesem Zeitpunkt ist die Ventilvorrichtung wieder in Schließposition.

Wird der voranstehende Vorgang für vorteilhafterweise alle Ansaugvorrichtungen bei einem Materialwechsel durchgeführt, so stellt sich die gewünschte Folgemischung deutlich schneller bzw. nach einer geringeren Übergangszeit ein. Neben der Maximierung der produktiven Zeit einer entsprechenden Extrusionsvorrichtung wird auf diese Weise das Ausschussmaterial, welches in einer solchen Übergangszeit produziert wird, deutlich reduziert.

Der Kerngedanke der vorliegenden Erfindung ist es also, eine Ventilvorrichtung sozusagen als lokales Ventil an der Ansaugvorrichtung und/oder im Bereich der Ansaugöffnung zur Verfügung zu stellen, um durch die Öffnung an die Umgebung ein Leersaugen für die Ansaugleitung und/oder zumindest einen Teil der Ansaugvorrichtung zur Verfügung stellen zu können. Das Umstellen der Ventilvorrichtung von der Schließposition in die Öffnungsposition ist dabei vorzugsweise reversibel ausgebildet, kann also mehrfach erfolgen. So kann die Ansaugvorrichtung bei einer beliebigen Anzahl von Materialwechseln den voranstehend beschriebenen Vorgang reversibel und mehrfach durchführen. Auch ist die Bewegung zwischen der Schließposition und der Öffnungsposition direkt oder indirekt möglich. So kann die Ventilvorrichtung direkt die später noch beschriebene Ventilöffnung aufweisen. Jedoch ist grundsätzlich auch der Anschluss eines Schlauches zum Anschluss an die Umgebung an der Ventilvorrichtung denkbar, um zum Beispiel in staubintensiven Umgebungen eine erhöhte Sicherheit und ein optimiertes Verfahren zur Verfügung stellen zu können.

Unter einem Abdichten in der Schließposition bzw. einem Abschließen in der Schließposition ist insbesondere das Eintreten von Saugluft zu verstehen. Ein Abdichten gegen den Eintritt von Umgebungsluft führt dazu, dass der Unterdruck während des Normalbetriebs ausschließlich oder im Wesentlichen ausschließlich für die Förderung von Extrusionsmaterial zur Verfügung gestellt ist. Darüber hinaus dient das Abschließen der Ventilvorrichtung in der Schließposition auch den Austritt von Extrusionsmaterial zu vermeiden.

Es ist noch darauf hinzuweisen, dass eine Ansaugvorrichtung gemäß der vorliegenden Erfindung manuell, teilautomatisch oder vollautomatisiert ausgebildet sein kann. So ist unter einer manuellen Variante der Ansaugvorrichtung insbesondere die bereits angesprochene Sauglanze zu verstehen. Eine teilautomatisierte Lösung stellt eine Ansaugvorrichtung dann dar, wenn es sich um einen Anschlussstutzen an entsprechende Silovorlagen handelt, in welchen unterschiedliche Extrusionsmaterialien gelagert werden. Selbstverständlich kann dieser Anschluss an eine Silovorlage auch eine eigene Weiche bzw. Mischvorrichtung aufweisen, so dass die Ansaugvorrichtung in einem solchen Fall auch als automatisierte Ansaugvorrichtung verstanden werden kann.

Es kann von Vorteil sein, wenn bei einer erfindungsgemäßen Ansaugvorrichtung die Ventilvorrichtung eine Ventilöffnung und einen Ventilverschluss aufweist, wobei in Öffnungsposition der Ventilverschluss die Ventilöffnung zur Umgebung freigibt und in Schließposition der Ventilverschluss die Ventilöffnung zur Umgebung abschließt bzw. verschließt. Dabei handelt es sich um die einfachste und kostengünstige konstruktive Ausgestaltung einer solchen Ventilvorrichtung. Hier kann sowohl eine direkte, als auch eine indirekte Zugangsmöglichkeit zur Umgebung gewährleistet werden. Insbesondere können hier komplexe und kostenintensive Ventilvorrichtungen vermieden werden, um die erfindungsgemäßen Vorteile erzielen zu können.

Ein weiterer Vorteil ist erzielbar, wenn bei einer erfindungsgemäßen Ansaugvorrichtung der Ventilverschluss in der Schließposition mit einer Kraft, insbesondere mit einer Federkraft, in Richtung der Öffnungsposition beaufschlagt ist. Ein solcher Ventilverschluss erlaubt es nun, sozusagen eine Vorspannung zur Verfügung zu stellen, um die Bewegung in die Öffnungsposition zu erleichtern oder sogar teilautomatisiert bzw. automatisiert durchführen zu können. Ist die Kraft groß genug, um den Ventilverschluss automatisch in die Öffnungsposition zu bewegen, so kann eine einfache Auslösekraft diese Kraft freilegen, so dass der Ventilverschluss sich automatisch von dieser Kraft beaufschlagt in die Öffnungsposition bewegt. Wird eine motorische Antriebsweise des Ventilverschlusses gewünscht, so ist durch die Vorspannung eine Unterstützung bei der Öffnung möglich, so dass ein kleinerer und kostengünstigerer Motor eine schnelle Öffnungsfunktionalität zur Verfügung stellt. Das Bewegen in die Schließposition ist hinsichtlich des Zeitaufwandes weniger kritisch, da es sich zu diesem Zeitpunkt um einen Vorbereitungsschritt handelt, welcher außerhalb des aktuellen bzw. aktiven Produktionszyklus liegt. In beiden Fällen ist eine teilautomatische und/oder sogar eine automatische Öffnung der Ventilvorrichtung möglich.

Bei einer Ansaugvorrichtung gemäß dem voranstehenden Absatz ist es von Vorteil, wenn die Ventilvorrichtung einen Auslösemechanismus aufweist für die Freigabe der Federkraft in Richtung der Öffnungsposition. Ein solcher Auslösemechanismus kann mechanisch, elektrisch und/oder elektromechanisch ausgebildet sein. So kann in allen Fällen der Auslösemechanismus mit einem Auslösesignal bzw. einem Auslöseimpuls ausgelöst werden. Dies kann unidirektional oder bidirektional erfolgen. So reicht es insbesondere bei der Beaufschlagung einer Vorspannkraft aus, wenn der Auslösemechanismus mit einem Auslösesignal beaufschlagt wird und auf diese Weise automatisch sich der Ventilverschluss in die Öffnungsposition bewegt. Die umgekehrte Richtung, also das Verschließen in Schließposition kann zum Beispiel manuell durch den Benutzer der Ansaugvorrichtung gewährleistet werden. Jedoch sind auch andere Anschlussmöglichkeiten mit zwei oder mehr Signalleitungen denkbar, um in bidirektionaler Kommunikationsmöglichkeit eine Information über den Status der Ventilvorrichtung an eine übergeordnete Kontrolleinheit zurücksenden zu können.

Ebenfalls Vorteile bringt es mit sich, wenn bei einer erfindungsgemäßen Ansaugvorrichtung die Ventilvorrichtung ein Signalisierungsmittel aufweist, für das Erzeugen eines Ventilsignals zumindest beim Erreichen der Öffnungsposition und/oder der Schließposition. Wie bereits im voranstehenden Absatz angedeutet, kann eine übergeordnete Kontrolleinheit entsprechende Signalisierungsinformationen auswerten. Jedoch kann ein solches Ventilsignal auch optisch und/oder akustisch dementsprechend dem Bearbeiter oder Benutzer der Ansaugvorrichtung eine Rückmeldung über den Status der Ventilvorrichtung geben. Dieses Abfragesignal kann sowohl dauerhaft als auch in gepulster Weise erzeugt bzw. zur Verfügung gestellt werden.

Ebenfalls von Vorteil ist es, wenn bei einer erfindungsgemäßen Ansaugvorrichtung eine Anzeigevorrichtung, insbesondere an der Ventilvorrichtung, vorgesehen ist, zur Anzeige des aktuell geförderten Extrusionsmaterials. Somit kann direkt an der Anzeigevorrichtung der Benutzer derselben unterscheiden, ob es sich hier um das Einsatzmaterial, das Folgematerial oder noch um das Vorgängermaterial handelt. Eine solche Anzeigevorrichtung ist insbesondere eine optische Anzeigevorrichtung und kann zum Beispiel eine LED-Anzeige oder LED-Farbanzeigen aufweisen. Die Anzeige kann sowohl qualitativ sein als auch in abstrakter Weise zwischen zwei oder drei Basisinformationen, also zwischen einem Einsatzmaterial, dem Folgematerial und/oder dem Vorgängermaterial unterscheiden.

Ein weiterer Vorteil ist es, wenn bei einer erfindungsgemäßen Ansaugvorrichtung die Ventilvorrichtung ein Antriebsmittel aufweist für ein automatisches Stellen der Ventilvorrichtung in die Öffnungsposition und/oder die Schließposition. Ein solches Antriebsmittel ist insbesondere reversibel ausgebildet, so dass die Öffnungsposition und die Schließposition mit der Ventilvorrichtung durch das Antriebsmittel erreicht werden kann. So kann beispielsweise ein entsprechender Ventilverschluss durch das Antriebsmittel bewegt werden. Auch das Stellen von anderen Ventilkörpern mithilfe des Antriebsmittels ist hier denkbar. Bevorzugt ist es, wenn das Antriebsmittel zumindest in Öffnungsrichtung, also für eine Bewegung in die Öffnungsposition wirkt. Die bereits erläuterte Federfunktionalität, also das Vorsehen einer Vorspannkraft, kann kombiniert mit einem Antriebsmittel eingesetzt werden, um die Ausbildung, die Größe und die Kosten für ein solches Antriebsmittel zu reduzieren.

Weitere Vorteile sind erzielbar, wenn bei einer erfindungsgemäßen Ansaugvorrichtung die Ventilvorrichtung, insbesondere eine Ventilöffnung, eine Austrittssicherung aufweist gegen den Austritt von Extrusionsmaterial in der Öffnungsposition. Eine solche Austrittssicherung kann zum Beispiel als Gittereinsatz in einer entsprechenden Öffnung der Ventilvorrichtung ausgebildet sein. Auch andere Filter, welche gegen den Austritt von Feststoffpartikeln in Form von Extrusionsmaterial dienen, können hier eingesetzt werden. Eine solche Austrittssicherung wird bereits durch einen reduzierten Querschnitt der Ventilöffnung oder einen entsprechenden Schlauchanschluss zum Beispiel mit einem Absperrgitter zur Verfügung gestellt.

Ebenfalls Gegenstand der vorliegenden Erfindung ist eine Ansaugleitung für die Ansaugung von Extrusionsmaterial zu einem Vorlagebehälter einer Extrusionsvorrichtung. Eine solche Ansaugleitung weist eine Anschlussschnittstelle zum Anschluss an die Leitungsschnittstelle einer erfindungsgemäßen Ansaugvorrichtung auf. Weiter ist die Ansaugleitung mit einer Abgabeschnittstelle zum Anschluss an den Vorlagebehälter ausgestattet. Dabei ist eine Ventilvorrichtung vorgesehen, welche in einer Öffnungsposition die Ansaugleitung zur Umgebung öffnet und in einer Schließposition die Ansaugleitung zur Umgebung abschließt. Die Ventilvorrichtung der Ansaugleitung kann dabei identisch ausgebildet sein, wie sie im Detail mit Bezug auf die Ansaugvorrichtung erläutert worden ist. Damit bringt die Ansaugleitung die gleichen Vorteile mit sich, wie sie parallel auch für die Ansaugvorrichtung erläutert worden sind. Selbstverständlich kann der Anschluss an den Vorlagebehälter direkt oder indirekt erfolgen. So sind auch Weichenvorrichtungen denkbar, welche zwei oder mehr parallele Ansaugleitungen an einen gemeinsamen Vorlagebehälter anbinden. Die erfindungsgemäßen Vorteile werden unabhängig vom Ort der Ventilvorrichtung erreicht. So kann sowohl in der Ansaugleitung als auch in der Ansaugvorrichtung oder nur in einer dieser beiden Baugruppen die Ventilvorrichtung zum Erzielen der erfindungsgemäßen Optimierungsmöglichkeiten angeordnet werden.

Bei einer erfindungsgemäßen Ansaugleitung bringt es weitere Vorteile mit sich, wenn die Ventilvorrichtung in der Anschlussschnittstelle und/oder im Bereich der Anschlussschnittstelle angeordnet ist. Je kürzer der Weg zum entsprechenden Anschluss, umso länger ist der Weg zur Abgabeschnittstelle, so dass ein größerer Weg der Ansaugleitung beim Freiräumen bzw. Freisaugen der Ansaugleitung auch tatsächlich für dieses Freisaugen zur Verfügung steht. Die damit einhergehende Leerungslänge der Ansaugleitung wird vergrößert und auf diese Weise die Übergangszeit zwischen Einsatzmaterialmischungen und Folgematerialmischung verkürzt.

Es kann weiter von Vorteil sein, wenn bei einer erfindungsgemäßen Ansaugleitung die Ventilvorrichtung gemäß der vorliegenden Erfindung mit einer Ansaugvorrichtung ausgebildet ist. Bevorzugt ist auch ein Gegenstand der vorliegenden Erfindung ein Ansaugsystem mit einer erfindungsgemäßen Ansaugleitung und/oder einer erfindungsgemäßen Ansaugvorrichtung.

Ein weiterer Gegenstand der vorliegenden Erfindung ist ein Verfahren für das Lehren einer Ansaugleitung einer Extrusionsvorrichtung mit einer erfindungsgemäßen Ansaugvorrichtung und/oder mit einer erfindungsgemäßen Ansaugleitung beim Umschalten von einer Einsatzrezeptur auf eine Folgerezeptur. Hierfür weist das Verfahren die folgenden Schritte auf:
- Schalten der Ventilanordnung in der Öffnungsposition,
- Erzeugen eines Unterdrucks in der Ansaugleitung,
- Ansaugen des Extrusionsmaterials aus der Ansaugleitung und/oder der Förderleitung unter Druckausgleich aus der Umgebung.

Für das Ansaugen den Vorlagebehälter kann also bei der Umstellung auf die Folgerezeptur ein Leersaugen der Ansaugvorrichtung und/oder der Ansaugleitung in der beschriebenen Weise erfolgen. Damit bringt das Verfahren die gleichen Vorteile mit sich, wie sie ausführlich mit Bezug auf eine erfindungsgemäße Ansaugvorrichtung bzw. mit Bezug auf eine erfindungsgemäße Ansaugleitung erläutert worden sind.

Von Vorteil ist es, wenn bei einem erfindungsgemäßen Verfahren der Schritt des Ansaugens des Extrusionsmaterials durchgeführt wird, bis die Ansaugleitung und/oder die Förderleitung von Extrusionsmaterial frei oder im Wesentlichen frei ist. Auch hier wird wieder die Leerungslänge der Ansaugleitung vergrößert, so dass ein geringerer Anteil an Einsatzmaterial während des Umstellens auf das Folgematerial in dem Ansaugsystem verbleibt und auf diese Weise die Übergangszeit zur Produktion der Folgematerialmischung reduzierbar ist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine Ausführungsform einer erfindungsgemäßen Ansaugvorrichtung mit einer erfindungsgemäßen Ansaugleitung,
- Fig. 2: eine Ausführungsform einer erfindungsgemäßen Ansaugvorrichtung in Detaildarstellung,
- Fig. 3: die Ausführungsform der Fig. 2 mit der Ventilvorrichtung in Öffnungsposition,
- Fig. 4: eine Ausführungsform einer erfindungsgemäßen Ansaugleitung und
- Fig. 5: die Ausführungsform der Fig. 4 mit der Ventilvorrichtung in Öffnungsposition.

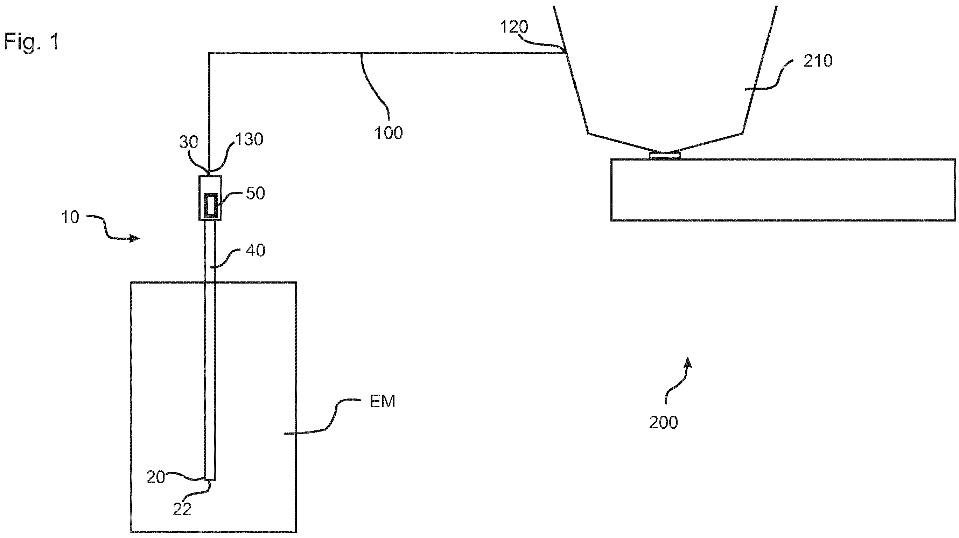

In Fig. 1 ist schematisch das Gesamtsystem in Kombination aus einem Vorlagebehälter 210, einer Ansaugleitung 100 und einer Ansaugvorrichtung 10 dargestellt. Im Normalbetrieb befindet sich das Einsatzmaterial als Extrusionsmaterial EM in einem Vorlagebehälter, zum Beispiel in einem Granulatsack. Über einen Unterdruck im Vorlagebehälter 200, welcher über die Ansaugleitung 100 an die Ansaugvorrichtung 10 weitergegeben wird, kann nun das Extrusionsmaterial EM über die Ansaugöffnung 22 in die Ansaugschnittstelle 20 dieser Sauglanze eindringen. Über die Förderleitung 40 in der Ansaugvorrichtung 10 wird das Extrusionsmaterial EM bis zur Übergabe an die Leitungsschnittstelle 30 weitergeleitet. Über die Anschlussschnittstelle 130 dringt nun das bis hierher geförderte Extrusionsmaterial EM in die Ansaugleitung 100 ein und wird dort weiter bis zur Abgabeschnittstelle 120 gefördert, wo es in den Vorlagebehälter 210 eindringt. Der Vorlagebehälter 210 wird auf diese Weise vorzugsweise mit zwei oder mehr unterschiedlichen Extrusionsmaterialien EM bestückt und dort findet eine Vermischung statt, bevor das gemischte Material als Materialmischung in die Extrusionsvorrichtung 200 eindringen kann.

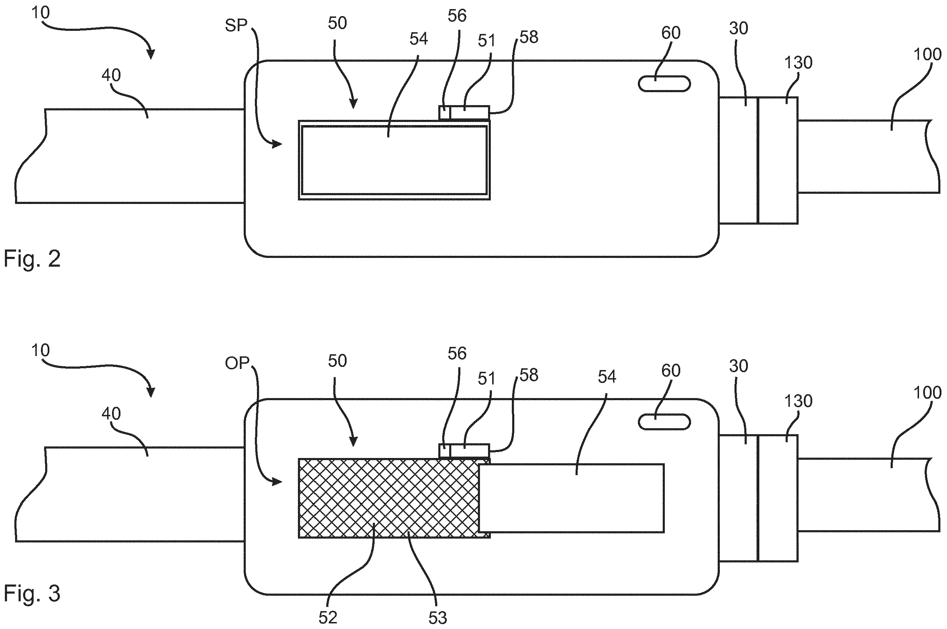

Für den Übergang von einem Einsatzmaterial des Extrusionsmaterials EM zu einem Folgematerial wird während der Positionierung am Einsatzmaterial noch ein Leersaugen der Ansaugleitung 100 und/oder eines Teils der Ansaugvorrichtung 10 durchgeführt. Hierfür ist eine Ventilvorrichtung 50 an der Ansaugvorrichtung 10 vorgesehen, wie sie im Detail in den Fig. 2 und 3 dargestellt ist.

Im Normalbetrieb befindet sich ein Ventilverschluss 54 der Ventilvorrichtung 50 in einer Schließposition SP gemäß Fig. 2. Hier verschließt ein Ventilverschluss 54 die Ventilöffnung 52 in abdichtender Weise. Für einen Übergang zu einem Leersaugschritt wird nun mithilfe eines Auslösemechanismus 56 zum Beispiel durch Auslösen einer Vorspannkraft der Ventilverschluss 54 in seine Öffnungsposition OP gemäß der Fig. 3 überführt. Hier ist nun die Ventilöffnung 52 freigelegt bis auf ein Vorhandensein einer Austrittssicherung 53 gegen das unerwünschte Austreten oder Herausrutschen von Extrusionsmaterial EM. Eine Anzeigevorrichtung 60 kann sowohl den Status als auch das hier geförderte Extrusionsmaterial EM anzeigen. Weiter ist die Ausführungsform der Fig. 2 und 3 noch mit einem Signalisierungsmittel 58 ausgestattet, welche eine Signalisierung des aktuellen Status der Ventilvorrichtung 50 bzw. eines vorhandenen Antriebsmittels 51 zur Verfügung stellen kann.

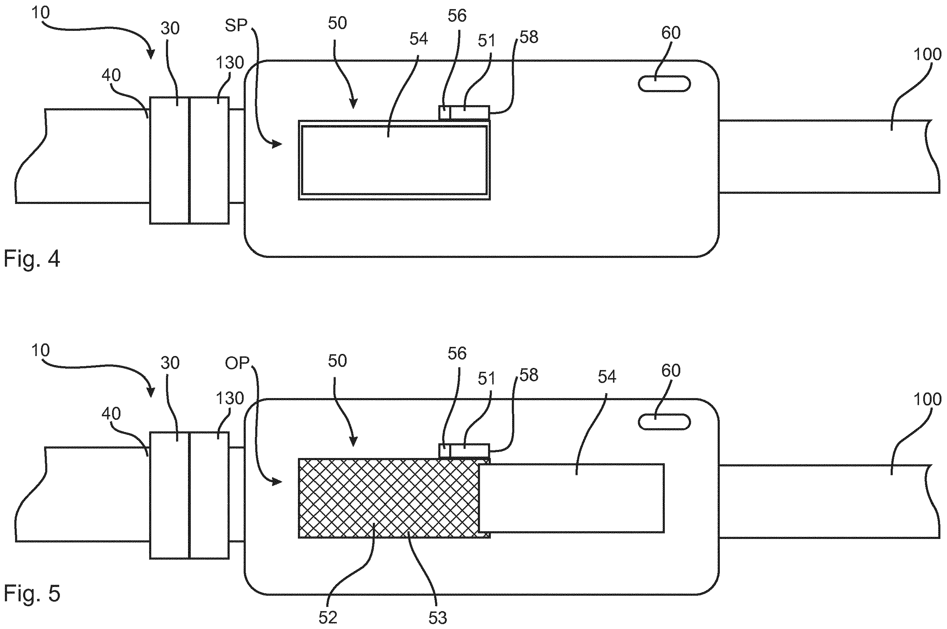

Die Fig. 4 und 5 zeigen eine im Wesentlichen identische Ausgestaltung und Funktionsweise der Ventilvorrichtung 50. Jedoch ist hier die Anordnung der Ventilvorrichtung 56 in der Ansaugleitung 100 durchgeführt, während die Fig. 2 und 3 die Ventilvorrichtung 56 als Teil der Ansaugvorrichtung 10 in der Förderleitung 40 zur Verfügung stellen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezuaszeichenliste

- 10: Ansaugvorrichtung
- 20: Ansaugschnittstelle
- 22: Ansaugöffnung
- 30: Leitungsschnittstelle
- 40: Förderleitung
- 50: Ventilvorrichtung
- 51: Antriebsmittel
- 52: Ventilöffnung
- 53: Austrittssicherung
- 54: Ventilverschluss
- 56: Auslösemechanismus
- 58: Signalisierungsmittel
- 60: Anzeigevorrichtung

- 100: Ansaugleitung
- 120: Abgabeschnittstelle
- 130: Anschlussschnittstelle

- 200: Extrusionsvorrichtung
- 210: Vorlagebehälter

- OP: Öffnungsposition
- SP: Schließposition
- EM: Extrusionsmaterial

## Patentansprüche

1. Ansaugvorrichtung (10) für die Ansaugung von Extrusionsmaterial (EM) zu einem Vorlagebehälter (210) einer Extrusionsvorrichtung (200) über eine Ansaugleitung (100), aufweisend eine Ansaugschnittstelle (20) mit einer Ansaugöffnung (22) zur Ansaugung von Extrusionsmaterial (EM) und eine Leitungsschnittstelle (30) für den Anschluss an die Ansaugleitung (100), wobei die Ansaugöffnung (22) mit der Leitungsschnittstelle (30) zur Förderung von Extrusionsmaterial (EM) über eine interne Förderleitung (40) verbunden ist und eine Ventilvorrichtung (50) vorgesehen ist, welche in einer Öffnungsposition (OP) die Förderleitung (50) zur Umgebung öffnet und in einer Schließposition (SP) die Förderleitung (50) zur Umgebung abschließt, **dadurch gekennzeichnet, dass** die Ansaugvorrichtung (10) eine Anzeigevorrichtung (60) aufweist zur Anzeige des aktuell geförderten Extrusionsmaterials (EM).

2. Ansaugvorrichtung (10) nach Anspruch 1, **dadurch gekennzeichnet, dass** die Ventilvorrichtung (50) eine Ventilöffnung (52) und einen Ventilverschluss (54) aufweist, wobei in Öffnungsposition (OP) der Ventilverschluss (54) die Ventilöffnung (52) freigibt und in Schließposition (SP) der Ventilverschluss (54) die Ventilöffnung (52) verschließt.

3. Ansaugvorrichtung (10) nach Anspruch 2, **dadurch gekennzeichnet, dass** der Ventilverschluss (54) in der Schließposition (SP) mit einer Kraft, insbesondere mit einer Federkraft, in Richtung der Öffnungsposition (OP) beaufschlagt ist.

4. Ansaugvorrichtung (10) nach Anspruch 3, **dadurch gekennzeichnet, dass** die Ventilvorrichtung (50) einen Auslösemechanismus (56) aufweist für die Freigabe der Federkraft in Richtung der Öffnungsposition (OP).

5. Ansaugvorrichtung (10) nach einem der vorangegangenen Ansprüche, **dadurch gekennzeichnet, dass** die Ventilvorrichtung (50) ein Signalisierungsmittel (58) aufweist für das Erzeugen eines Ventilsignals zumindest beim Erreichen der Öffnungsposition (OP) und/oder der Schließposition (SP).

6. Ansaugvorrichtung (10) nach einem der vorangegangenen Ansprüche, **dadurch gekennzeichnet, dass** die Anzeigevorrichtung (60) an der Ventilvorrichtung (50) vorgesehen ist.

7. Ansaugvorrichtung (10) nach einem der vorangegangenen Ansprüche, **dadurch gekennzeichnet, dass** die Ventilvorrichtung (50) ein Antriebsmittel (51) aufweist für ein automatisches Stellen der Ventilvorrichtung (50) in die Öffnungsposition (OP) und/oder die Schließposition (SP).

8. Ansaugvorrichtung (10) nach einem der vorangegangenen Ansprüche, **dadurch gekennzeichnet, dass** die Ventilvorrichtung (50), insbesondere eine Ventilöffnung (52), eine Austrittssicherung (53) aufweist gegen den Austritt von Extrusionsmaterial (EM) in der Öffnungsposition (OP).

9. Verfahren für das Leeren einer Ansaugleitung (100) einer Extrusionsvorrichtung (200) mit einer Ansaugvorrichtung (10) mit den Merkmalen eines der Ansprüche 1 bis 8 beim Umschalten von einer Einsatzrezeptur auf eine Folgerezeptur, aufweisend die folgenden Schritte:
- Schalten der Ventilvorrichtung (50) in die Öffnungsposition (OP),
- Erzeugen eines Unterdrucks in der Ansaugleitung (100),
- Ansaugen des Extrusionsmaterials (EM) aus der Ansaugleitung (100) und/oder der Förderleitung (40) unter Druckausgleich aus der Umgebung

10. Verfahren nach Anspruch 9, **dadurch gekennzeichnet, dass** der Schritt des Ansaugens des Extrusionsmaterials (EM) durchgeführt wird, bis die Ansaugleitung (100) und/oder die Förderleitung (40) von Extrusionsmaterial (EM) frei oder im Wesentlichen frei sind.

## Claims

1. A suction device (10) for the suction of extrusion material (EM) to a storage container (210) of an extrusion device (200) via a suction line (100), having a suction interface (20) with a suction opening (22) for the suction of extrusion material (EM) and a line interface (30) for connecting to the suction line (100), wherein the suction opening (22) is connected to the line interface (30) for conveying extrusion material (EM) via an internal conveying line (40), and a valve device (50) is provided, which opens the conveying line (50) to the surroundings in an opening position (OP) and closes the conveying line (50) to the surroundings in a closed position (SP),
**characterized in that**
the suction device (10) has a display device (60) for displaying the currently conveyed extrusion material (EM).

2. The suction device (10) according to claim 1, **characterized in that** the valve device (50) has a valve opening (52) and a valve closure (54), wherein in the opening position (OP) the valve closure (54) releases the valve opening (52) and in the closed position (SP) the valve closure (54) closes the valve opening (52).

3. The suction device (10) according to claim 2, **characterized in that** the valve closure (54) is subjected in the closed position (SP) to a force, in particular to a spring force, in the direction of the opening position (OP).

4. The suction device (10) according to Claim 3, **characterized in that** the valve device (50) has a release mechanism (56) for releasing the spring force in the direction of the opening position (OP).

5. The suction device (10) according to any one of the preceding claims, **characterized in that** the valve device (50) has a signaling means (58) for generating a valve signal at least when the opening position (OP) and/or the closed position (SP) is reached.

6. The suction device (10) according to any one of the preceding claims, **characterized in that** a display device (60) is provided on the valve device (50).

7. The suction device (10) according to any one of the preceding claims, **characterized in that** the valve device (50) has a drive means (51) for automatically setting the valve device (50) into the opening position (OP) and/or the closing position (SP).

8. The suction device (10) according to any one of the preceding claims, **characterized in that** the valve device (50), in particular a valve opening (52), has a leakage protection (53) against the leakage of extrusion material (EM) into the opening position (OP).

9. A method for emptying a suction line (100) of an extrusion device (200) having a suction device (10) with the features of one of claims 1 to 8 when switching from an application recipe to a following recipe, having the following steps:
- switching the valve device (50) into the opening position (OP),
- generating a negative pressure in the suction line (100),
- suctioning the extrusion material (EM) from the suction line (100) and/or the conveying line (40) with pressure compensation from the surroundings.

10. The method according to claim 9, **characterized in that** the step of suctioning the extrusion material (EM) is carried out until the suction line (100) and/or the conveying line (40) are free or substantially free of extrusion material (EM).

## Revendications

1. Dispositif d'aspiration (10) pour l'aspiration d'un matériau d'extrusion (EM) vers un récipient collecteur (210) d'un dispositif d'extrusion (200) par l'intermédiaire d'une conduite d'aspiration (100), comprenant une interface d'aspiration (20) avec une ouverture d'aspiration (22) pour l'aspiration d'un matériau d'extrusion (EM) et une interface de conduite (30) pour le raccordement à la conduite d'aspiration (100), dans lequel l'ouverture d'aspiration (22) est reliée avec l'interface de conduite (30) pour le transport du matériau d'extrusion (EM) par l'intermédiaire d'une conduite de transport interne (40) et un dispositif à soupape (50) est prévu, qui, dans une position d'ouverture (OP), ouvre la conduite de transport (50) vers l'environnement et, dans une position de fermeture (SP), ferme la conduite de transport (50) vers l'environnement,
**caractérisé en ce que**
le dispositif d'aspiration (10) comprend un dispositif d'affichage (60) pour l'affichage du matériau d'extrusion (EM) actuellement transporté.

2. Dispositif d'aspiration (10) selon la revendication 1, **caractérisé en ce que** le dispositif à soupape (50) comprend une ouverture de soupape (52) et une fermeture de soupape (54), dans lequel, dans la position d'ouverture (OP), la fermeture de soupape (54) libère l'ouverture de soupape (52) et, dans la position de fermeture (SP), la fermeture de soupape (54) ferme l'ouverture de soupape (52).

3. Dispositif d'aspiration (10) selon la revendication 2, **caractérisé en ce que** la fermeture de soupape (54) est sollicitée, dans la position de fermeture (SP), avec une force, plus particulièrement avec une force élastique, dans la direction de la position d'ouverture (OP).

4. Dispositif d'aspiration (10) selon la revendication 3, **caractérisé en ce que** le dispositif à soupape (50) comprend un mécanisme de déclenchement (56) pour la libération de la force élastique en direction de la position d'ouverture (OP).

5. Dispositif d'aspiration (10) selon l'une des revendications précédentes, **caractérisé en ce que** le dispositif à soupape (50) comprend un moyen de signalisation (58) pour la production d'un signal de soupape au moins lorsque la position d'ouverture (OP) et/ou la position de fermeture (SP) est atteinte.

6. Dispositif d'aspiration (10) selon l'une des revendications précédentes, **caractérisé en ce que** le dispositif d'affichage (60) est prévu sur le dispositif à soupape (50).

7. Dispositif d'aspiration (10) selon l'une des revendications précédentes, **caractérisé en ce que** le dispositif à soupape (50) comprend un moyen d'entraînement (51) pour un réglage automatique du dispositif à soupape (50) dans la position d'ouverture (OP) et/ou la position de fermeture (SP).

8. Dispositif d'aspiration (10) selon l'une des revendications précédentes, **caractérisé en ce que** le dispositif à soupape (50), plus particulièrement une ouverture de soupape (52), comprend une sécurité de sortie (53) contre la sortie du matériau d'extrusion (EM) dans la position d'ouverture (OP).

9. Procédé pour la vidange d'une conduite d'aspiration (100) d'un dispositif d'extrusion (200) avec un dispositif d'aspiration (10) présentant les caractéristiques d'une des revendications 1 à 8 lors du passage d'une recette initiale à une recette suivante, comprenant les étapes suivantes :
- commutation du dispositif à soupape (50) dans la position d'ouverture (OP),
- production d'une dépression dans la conduite d'aspiration (100),
- aspiration du matériau d'extrusion (EM) hors de la conduite d'aspiration (100) et/ou de la conduite de transport (40) grâce à compensation de pression avec l'environnement.

10. Procédé selon la revendication 9, **caractérisé en ce que** l'étape d'aspiration du matériau d'extrusion (EM) est exécutée jusqu'à ce que la conduite d'aspiration (100) et/ou la conduite de transport (40) soit exempte ou globalement exempte de matériau d'extrusion (EM).
